# EUROPÄISCHE PATENTSCHRIFT

(11) **EP 2 533 018 B1**
(45) Veröffentlichungstag und Bekanntmachung des Hinweises auf die Patenterteilung: **07.05.2014**
(21) Anmeldenummer: 11405268.1
(22) Anmeldetag: 10.06.2011
(51) Int. Cl.: G01D 5/20

(54) **Lineares Wegmesssystem**
Linear distance measuring system
Système de mesure de trajectoire linéaire

(43) Veröffentlichungstag der Anmeldung: 12.12.2012
(73) Patentinhaber: Schneeberger Holding AG, 4914 Roggwil (CH)
(72) Erfinder: Götz, Klaus-Dieter, 74372 Sersheim (DE)
(74) Vertreter: EGLI-EUROPEAN PATENT ATTORNEYS

(56) Entgegenhaltungen:
- EP-A1- 1 366 849
- EP-A1- 1 752 851

## Beschreibung

Die Erfindung betrifft ein lineares Wegmesssystem nach Patentanspruch 1.

Systeme zum Bestimmen einer Position eines Laufschlittens in Relation zu einer Laufschiene der vorstehend genannten Art werden beispielsweise in Kombination mit Führungssystemen, z.B. Linearführungen, verwendet. Linearführungen umfassen einen ersten Körper und einen relativ zum ersten Körper bewegbaren, an dem ersten Körper geführten zweiten Körper und haben dabei die Aufgabe, eine Bestimmung der Position des zweiten Körpers relativ zum ersten Körper zu ermöglichen. Zu diesem Zweck können beispielsweise eine Messskala der jeweiligen Vorrichtung zur Bestimmung einer Position ortsfest relativ zum ersten Körper und eine jeweilige Abtastvorrichtung ortsfest relativ zum zweiten Körper angeordnet sein.

Es sind beispielsweise lineare Wegmesssysteme zur Bestimmung einer absoluten Position bekannt, welche die Messskala mit darauf aufgetragenen Messpunkten und eine relativ zur Messskala bewegbare Abtastvorrichtung zum Abtasten der jeweiligen Messpunkte umfassen. Diese Messpunkte sind beispielsweise durch eine oder mehrere erfassbare Positionsmarkierungen zur Kennzeichnung einer Position gebildet. Diese Positionsmarkierungen können beispielsweise optisch oder magnetisch abgetastet bzw. erfasst werden.

Im Falle der optischen Abtastung umfasst die Abtastvorrichtung einen Sensor zum Erfassen eines Bildes der Messpunkte und zum Bereitstellen von Signalen, welche eine Bestimmung der Position der Abtastvorrichtung relativ zur Messskala ermöglichen. Im Falle der magnetischen Abtastung umfasst die Abtastvorrichtung einen Magnetfeldsensor zum Erfassen eines Magnetfeldverlaufes von einzelnen Permanentmagneten, welche in diesem Fall die Messpunkte der Messskala ausbilden.

In Abhängigkeit von der jeweiligen Messskala (optisch/magnetisch) können derartige Systeme beispielsweise verwendet werden, um eine relative Veränderung einer Position der Abtastvorrichtung in Relation zu einer Ausgangsposition zu messen.

Um zu erreichen, dass derartige Systeme relative Veränderungen der Position der Abtastvorrichtung bezüglich der Messskala messen können, kann die jeweilige Messskala beispielsweise als inkrementale Skala ausgebildet sein und dementsprechend eine Folge von mehreren identischen, periodisch angeordneten inkrementalen Markierungen umfassen, welche in gleichen Abständen längs einer vorgegebenen Linie bzw. der Messskala angeordnet sind. Um beispielsweise eine optische Abtastung einer derartigen inkrementalen Messskala zu ermöglichen, kann die Abtastvorrichtung ein optisches Bild der jeweiligen Markierungen auf einen Sensor in Form eines fotoelektrischen Detektors projizieren. Um relative Veränderungen der Position der Abtastvorrichtung bezüglich der Messskala zu messen, wird die Abtastvorrichtung entlang der Spur der Markierungen bewegt. Die Bewegung der Abtastvorrichtung resultiert dabei in einer periodischen Veränderung eines Signals, welche beispielsweise Aufschluss gibt über die Anzahl der inkrementalen Markierungen, an welchen die Abtastvorrichtung innerhalb einer vorbestimmten Zeit vorbeibewegt wurde.

Zusammengefasst, kann die jeweilige Änderung der relativen Position der Abtastvorrichtung durch Abtasten der Messpunkte bzw. inkrementalen Markierungen einer inkrementalen Messskala bestimmt werden. Hierzu werden sogenannte Inkrementalgeber verwendet, welche vergleichsweise einfach aufgebaut sind und eine hohe Auflösung haben.

Neben der Erfassung der relativen Bewegung zwischen Laufschiene und Laufwagen bzw. Abtastvorrichtung kann das System auch ausgelegt sein, eine absolute Position der Abtastvorrichtung bezüglich einer weiteren Messskala, nämlich einer absoluten Messskala festzustellen, welche absolute Markierungen enthält. Hierbei kann die jeweilige absolute Position der Abtastvorrichtung an einem beliebigen Ort entlang der Laufschiene bestimmt werden, indem eine Änderung der relativen Position der Abtastvorrichtung bezüglich eines bestimmten Referenzpunktes gemessen wird. Die Abtastung der absoluten Markierungen muss hierbei besonders zuverlässig erfolgen, da eine jegliche Fehlinterpretation zu einer völlig falschen Aussage bezüglich der Position des Laufschlittens in Bezug auf die Laufschiene führen würde.

Zu diesem Zweck kann die Referenzskala längs der vorgegebenen Linie die absoluten Markierungen enthalten, welche jeweils eine bestimmte absolute Position spezifizieren. Zur Bestimmung der Position kann die zuvor genannte Abtastvorrichtung längs der vorgegebenen Linie bewegt werden, um die jeweiligen absoluten Markierungen mittels der Abtastvorrichtung optisch oder magnetisch abzutasten.

Zusammengefasst, übertragen solche sogenannten Absolutwertgeber stets die gesamte Positionsinformation und sind deshalb sehr gut zur Positionsbestimmung und -regelung geeignet. Die konventionelle Art besteht im Auslesen einer binären Information, wobei für jede binäre Stelle eine entsprechende optische oder magnetische Abtastung nötig ist. Alle diese Abtastungen müssen zueinander so eingestellt sein, dass unter allen Betriebsbedingungen kein Lesefehler auftreten kann.

Laufschienen sind aus fertigungstechnischen Gründen, z.B. maschinelles Schleifen, nur mit einer beschränkten maximalen Länge herstellbar. Die maximale Länge einer einstückigen Laufschiene beträgt derzeit ca. 6 m. Werden längere Laufschienen benötigt, so ist es bekannt, die Laufschiene aus mehreren linear hintereinander angeordneten Einzelschienen zusammenzusetzen.

An den Stossstellen von den mehreren linear hintereinander angeordneten Einzelschienen mit integriertem Massstab werden die Massstäbe mit Hilfe von Messwerkzeugen mechanisch so eingestellt, dass die Massstabskodierung mit möglichst geringem Fehler in Phase gebracht wird. Die Detektion von einer absoluten Position des Laufschlittens wird durch einen extern angebrachten Schaltnocken realisiert. Von diesem Referenzpunkt aus wird dann die aktuelle Position des Laufschlittens berechnet. Jedoch wird bei einem Ausschalten des linearen Wegmesssystems die aktuelle Position des Laufschlittens nicht gespeichert. Es besteht daher ein Nachteil darin, dass bei einem Einschalten des linearen Wegmesssystems nunmehr der Laufschlitten zur Kalibrierung einen langen Verfahrweg zurücklegen muss bis ein Referenzpunkt erreicht wird. Dies ist insbesondere bei einer langen Laufschiene mit einem hohen Zeitaufwand verbunden.

Eine weitere bekannte Möglichkeit der Positionsmarkierung mittels absoluter Markierung einer aus mehreren Einzelschienen zusammengesetzten Laufschiene besteht darin, dass die absolute Markierung von Einzelschiene zu Einzelschiene logisch fortgesetzt wird. Hierzu gibt die absolute Markierung jeweils individuelle Kodes wieder, beispielsweise Kodes, welche eine Information über eine fortschreitende Nummerierung, eine individuelle Positionsangabe, usw. tragen. Es besteht ein Problem darin, dass die jeweiligen Kodes mit steigender Anzahl von Einzelschienen aus immer mehr Symbolen (Bits) zusammengesetzt werden müssen. Hierbei wird es notwendig, den Abstand der jeweiligen Kodes voneinander zu vergrössern, wodurch unvorteilhafterweise die Genauigkeit der Positionsangabe aufgrund von einer geringeren Rasterung abnimmt.

Im Falle einer absoluten Markierung mittels Kodes mit gleicher Anzahl von Symbolen, wie häufig u.a. zur Fehlererkennung verwendet, kann ein Problem im Falle einer optionalen Erweiterung der Laufschiene durch Hinzufügen von weiteren Einzelschienen entstehen. Da diese zusätzlichen Einzelschienen auch mit Kodes der vorgegebenen Anzahl von Symbolen versehen werden müssen, kann der Fall auftreten, dass diese vorgegebene Anzahl von Symbolen nicht mehr zur eindeutigen Kodierung ausreicht. In einem solchen Fall müsste das gesamte Kodierungsschema der Laufschiene durch neue Kodes einer höheren vorgegebenen Anzahl von Symbolen ersetzt werden. Dieser Umstand ist mit sehr hohen Kosten verbunden.

Ein weiteres Problem aus dem Stand der Technik liegt im Austausch von zumindest einer Einzelschiene aus dem Verbund von Einzelschienen, welche insgesamt die Laufschiene zusammensetzen. Ein solcher Austausch kann aufgrund von Verschleiss einer bestimmten Einzelschiene notwendig sein. Bei einem Austausch einer einzelnen Einzelschiene muss nunmehr eine neue Einzelschiene mit exakt der gleichen absoluten Markierung von der ausgetauschten Einzelschiene eingesetzt werden. Dazu muss diese absolute Markierung zunächst bestimmt und anschliessend auf der absoluten Messskala reproduziert werden. Die somit reproduzierte absolute Messskala muss dann an die neue Einzelschiene angebracht werden. Diese Schritte sind aufgrund Ermangelung von hierzu geeigneten Vorrichtungen kaum an Ort und Stelle des linearen Wegmesssystems durchführbar. In der Praxis wird daher die notwendige Information zur entsprechenden Reproduktion der absoluten Messskala und somit der neuen Einzelschiene an eine externe Fachfirma hierzu (beispielsweise der Hersteller des linearen Wegmesssystems) kommuniziert. Diese präpariert daraufhin eine neue Einzelschiene mit der jeweils entsprechend reproduzierten Messskala. Diese neue Einzelschiene wird daraufhin an Ort und Stelle des linearen Wegmesssystems transportiert und schlussendlich eingebaut. Dieses derzeitige Vorgehen ist teuer und erfordert einen langen Stillstand des Betriebes. Bei einem unvermeidbar sofortigen Ersatz einer Einzelschiene aufgrund eines plötzlichen Defektes ist ein zeitnaher Austausch dieser Einzelschiene nicht möglich. Ein oftmals tagelanger Stillstand des linearen Wegmesssystems ist daher die Folge. Die hierdurch entstehenden Kosten durch den Ausfall des linearen Wegmesssystems sind sehr hoch.

Es ist Aufgabe der vorliegenden Erfindung ein lineares Wegmesssystem bereitzustellen, bei welchem die zuvor genannten Probleme gelöst werden. Es ist insbesondere Aufgabe ein lineares Wegmesssystem bereitzustellen, bei welchem die Laufschiene schnell und einfach um zumindest eine Einzelschiene erweitert werden kann und/oder zumindest eine Einzelschiene schnell und einfach ausgetauscht werden kann.

Diese Aufgabe wird durch die Merkmale des Patentanspruchs 1 gelöst. In einer Ausführungsform der Erfindung enthält ein lineares Wegmesssystem zum Bestimmen von einer Position eines Laufschlittens in Relation zu einer aus einer Mehrzahl von Einzelschienen linear zusammengesetzten Laufschiene, entlang welcher der Laufschlitten führbar ist, eine Mehrzahl von jeweils entlang von den Einzelschienen aufgetragenen Messskalen, auf welchen jeweils Positionsmarkierungen angeordnet sind, und zumindest eine am Laufschlitten angebrachte Abtastvorrichtung, welche dazu ausgelegt ist, die Positionsmarkierungen abzutasten, wodurch die jeweilige Position des Laufschlittens in Relation zu einer jeweiligen Einzelschiene, auf welche der Laufschlitten geführt ist, bestimmbar ist. Bei allen Einzelschienen sind die Positionsmarkierungen identisch auf der jeweiligen Mehrzahl von Messskalen angeordnet. An den Einzelschienen ist jeweils eine separate Individualkodierung bereitgestellt, welche durch die Abtastvorrichtung abtastbar ist, wodurch eine individuelle Information über eine jeweilige Einzelschiene, auf welche der Laufschlitten geführt ist, bestimmbar ist.

Es besteht ein ganz wesentlicher Vorteil darin, dass nunmehr Einzelschienen mit zueinander identischen Messskalen verwendet werden können. Um dennoch eine exakte Positionsbestimmung in Relation zur Laufschiene, d.h. über die mehreren Einzelschienen hinweg, zu ermöglichen, wird jede Einzelschiene mit einer separaten Individualkodierung versehen. Diese jeweilige Individualkodierung ist durch die Abtastvorrichtung abtastbar und trägt eine Information darüber auf welcher Einzelschiene von der Mehrzahl von Einzelschienen der Laufschlitten aktuell bewegt wird. Eine jegliche weitere Information zur Bestimmung der Position in Relation zu dieser erfassten Einzelschiene wird durch herkömmliches Abtasten der Positionsmarkierungen auf der zumindest einen Messskala erfasst.

Auf Basis dieser zusammengefassten Information aus der Individualkodierung und der zumindest einen Positionsmarkierung ist dann eine Positionsbestimmung in Relation zu der gesamten Laufschiene möglich. Die Individualkodierung kann schnell und einfach angebracht werden, beispielsweise direkt an Ort und Stelle des linearen Wegmesssystems. Für diese Arbeit ist kein Fachpersonal notwendig. Das Anbringen der Individualkodierung kann schnell und einfach an Ort und Stelle des linearen Wegmesssystems durch beispielsweise einen Bediener des linearen Wegmesssystems ausgeführt werden. Im Falle einer Erweiterung der Laufschiene mit mindestens einer Einzelschiene kann die für diese Einzelschiene notwendige Individualkodierung beispielsweise aus einer vom Hersteller herausgegebenen Spezifikation entnommen werden. Notwendige Elemente zur Implementierung der Individualkodierung können einfach an Ort und Stelle vorgehalten werden. Somit kann die Laufschiene schnell und einfach mit zumindest einer Einzelschiene erweitert werden.

Es besteht ein weiterer Vorteil darin, dass der Laufschlitten nunmehr lediglich einen begrenzten Laufweg zur Erkennung der absoluten Position zurücklegen muss. Von einem Initialzustand aus beginnend, wird somit die Zeitdauer zum Kalibrieren des linearen Wegmesssystems reduziert.

Auch gestaltet sich ein Austausch von zumindest einer Einzelschiene als problemlos. Hierbei kann eine an Ort und Stelle des linearen Wegmesssystems vorgehaltene (Ersatz-) Einzelschiene entnommen werden und mit jener Individualkodierung versehen werden, mit welcher auch die auszutauschende Einzelschiene versehen ist. Ein oftmals tagelanger Stillstand des linearen Wegmesssystems, bedingt durch die langandauernde Reproduktion der absoluten Markierung bei der Fachfirma und den anschliessenden Transport an Ort und Stelle des linearen Wegmesssystems entfällt somit. Hierdurch werden Zeit und Kosten gespart.

Vorzugsweise trägt die Individualkodierung von Einzelschiene zu Einzelschiene die Information einer fortlaufenden Nummerierung. Mit Hilfe der Kombination aus der Information über welche Einzelschiene aus der Mehrzahl von Einzelschienen der Laufschlitten bewegt wird und der Information über die Position des Laufschlittens in Relation zu dieser Einzelschiene ist eine generelle Positionsbestimmung des Laufschlittens über die gesamte Laufschiene hinweg möglich.

Vorzugsweise ist die fortlaufende Nummerierung durch einen Gray-Kode kodiert. Der Gray-Kode dient als Kodierungsverfahren zur robusten Übertragung digitaler Größen über analoge Signalwege. Dieser Kode ist stetig, wobei sich benachbarte Kodewörter der Individualkodierung nur in einer einzigen dualen Ziffer unterscheiden. Dadurch verringert sich der Ablesefehler bei der Quantisierung aus einem Analogsignal auf die Individualkodierung. Ein Fehler bei der Erfassung auf genau welcher der Einzelschienen der Laufschlitten aktuell bewegt wird, würde zu einer komplett fehlerhaften Positionsbestimmung führen. Durch Verwenden des Gray-Kodes wird diese Fehlerquelle auf ein Maximum minimiert oder zumindest erkannt. Es können weitere Kodierungen aus dem Bereich der Kanalkodierung zur Fehlererkennung und -korrektur implementiert werden. Insgesamt wird die Zuverlässigkeit der korrekten Erfassung der jeweiligen Einzelschiene und somit die Zuverlässigkeit der korrekten Positionsbestimmung des Laufschlittens erhöht.

Vorzugsweise ist die Individualkodierung einer jeweiligen Einzelschiene durch eine Mehrzahl von Verschlussstopfen implementiert, welche in jeweilige Bohrungen der Einzelschienen eingebracht sind und diese verschliessen. Bei dieser besonders vorteilhaften Ausgestaltung können die ohnehin verwendeten Verschlussstopfen zum Verschliessen von Bohrlöchern zusätzlich zur Implementierung bzw. Umsetzung der Individualkodierung herangezogen werden. Durch eine kodierte Anordnung der Verschlussstopfen kann eine Kodierung jeder verwendeten Einzelschiene angebracht werden. Nachdem der Laufschlitten über eine bestimmte Anzahl von Verschlussstopfen geführt ist, kann die Position der Einzelschiene in Relation zu der gesamten Laufschiene hergeleitet werden. Hierbei steht die Anzahl der Verschlussstopfen in Abhängigkeit von der zu kodierenden Länge. Nachdem oder während die Position der Einzelschiene in Relation zu der gesamten Laufschiene hergeleitet ist, kann ein Sensor der Abtastvorrichtung zum Abtasten der Positionsmarkierungen der jeweiligen Messskala auf der jeweiligen Einzelschiene umgeschaltet werden.

Vorzugsweise trägt jeder der Verschlussstopfen eine diskrete Information. Hierbei sind den Ausgestaltungen der Aufprägung einer diskreten Information bzw. eines diskreten Zustandes keinerlei Grenzen gesetzt, solange gewährleistet ist, dass jeder diskrete Zustand eindeutig abtastbar ist.

Vorzugsweise ist die diskrete Information durch eine jeweilige Materialeigenschaft eines Werkstoffes herleitbar, welcher in dem Verschlussstopfen enthalten ist. Durch die Verwendung von Verschlussstopfen mit unterschiedlichen Materialien und somit unterschiedlichen Materialeigenschaften, wie schon derzeit gebräuchlich, kann der Schaltzustand des Sensors der Abtastvorrichtung zum Abtasten dieser Individualkodierung beeinflusst werden, so dass eine gebräuchliche Abtastung möglich ist. Die derzeit üblichen Verschlussstopfen sind beispielsweise aus Stahl, Messing oder Kunststoff gefertigt oder enthalten diese Materialien. Um diese Anzahl von Symbolen der Individualkodierung (Anzahl von Verschlussstopfen) zu erhöhen, können neben den Bohrungen zum Einbringen von Befestigungsschrauben zum Befestigen von der Einzelschiene auch weitere Bohrungen vorgesehen werden, in welche die Verschlussstopfen entsprechend kodiert eingebracht werden.

Vorzugsweise ist die diskrete Information durch eine jeweilige Geometrie von der Oberfläche des Verschlussstopfens herleitbar. Als Oberfläche des Verschlussstopfens ist hierbei jene Oberfläche gemeint, welche bündig mit der Oberfläche der Einzelschiene abschliesst. In diesem Beispiel könnte beispielsweise eine Individualkodierung aus unterschiedlichen Geometrien bestehen, welche jeweils unterschiedliche diskrete Zustände haben. Um die Kodeinformation kompakter aufnehmen zu können, sind Verschlussstopfen möglich, welche auf ihrer Oberfläche eine n-Bit Information (n = 1, 2, ...) tragen. Bei beispielsweise n = 4 könnte ein einzelner Verschlussstopfen somit 16 Zustände anzeigen. In diesem Beispiel könnte eine jede Einzelschiene einer Laufschiene aus 16 oder weniger Einzelschienen durch nur einen einzigen Verschlussstopfen ausreichend unterscheidbar kodiert werden. Diese 4-Bit Kodierung auf der Oberfläche eines Verschlussstopfens könnte durch Materialpaarungen (z.B. Stahl, Messing, Kunststoff, usw.) oder durch Geometrien aufgeprägt werden.

Vorzugsweise ist die diskrete Information durch ein Schaltelement herleitbar, welches im Verschlussstopfen integriert ist oder an der Oberfläche des Verschlussstopfens angebracht ist. Das Schaltelement kann hierbei ein passives oder aktives Bauelement sein. Durch die erhöhte Reichweite wird die Erfassungszuverlässigkeit erhöht.

Vorzugsweise ist das Schaltelement ein RFID-Datenträger. Ein RFID-Datenträger ermöglicht die automatische Identifizierung und Lokalisierung von Objekten und erleichtert damit erheblich die Erfassung von Daten. In diesem Beispiel ist zum Erfassen und Auslesen des RFID-Datenträgers ein entsprechendes RFID-Lesegerät am Laufwagen angebracht. Die RFID-Technologie ermöglicht eine besonders zuverlässige Erfassung der diskreten Information.

Vorzugsweise enthalten die Positionsmarkierungen eine inkrementale Markierung und/oder eine absolute Markierung. Inkrementale Markierungen sind eine Folge von mehreren periodisch angeordneten Markierungen von zumeist identischer Beabstandung längs einer vorgegebenen Spur. Durch Abtasten dieser Spur inkrementaler Markierungen wird die relative Veränderung der Position der Abtastvorrichtung innerhalb einer vorbestimmten Zeit bezüglich dieser Spur gemessen. Durch die Abtastung von absoluten Markierungen kann hingegen eine absolute Position der Abtastvorrichtung bezüglich einer jeden Einzelschiene bestimmt werden. Zu diesem Zweck spezifizieren die absoluten Markierungen jeweils eine bestimmte absolute Position.

Vorzugsweise sind die inkrementale Markierung und/oder absolute Markierung jeweils als einzelne Permanentmagnete ausgebildet, deren magnetischer Feldstärkeverlauf durch die zumindest eine Abtastvorrichtung abtastbar ist. Hierdurch ist eine besonders genaue Abtastung möglich, da die Magnetfeldabtastung im Vergleich zu weiteren Abtastverfahren besonders störunempfindlich ist. Zudem kann eine Abtastung mit besonders feiner Rasterung erfolgen, da die Permanentmagnete im Vergleich zu anderen Ausgestaltungen von Markierungen bei gleicher Abtastgenauigkeit eine geringere Breite haben können. Daher ist eine sehr kompakte Kodierung möglich.

Vorzugsweise sind die inkrementale Markierung und/oder absolute Markierung jeweils als optische Markierungen ausgebildet, welche durch die zumindest eine Abtastvorrichtung optisch abtastbar sind. Bei diesem Verfahren werden optisch detektierbare Markierungen, welche auf der jeweiligen Messskala angebracht bzw. aufgetragen sind, durch optische Leseköpfe der Abtastvorrichtung abgetastet. Diese Art und Weise der Abtastung ist im Vergleich zu weiteren Abtastverfahren besonders kostengünstig realisierbar.

Im Folgenden wird die Erfindung anhand eines Ausführungsbeispiels näher erläutert. Hierbei zeigt:

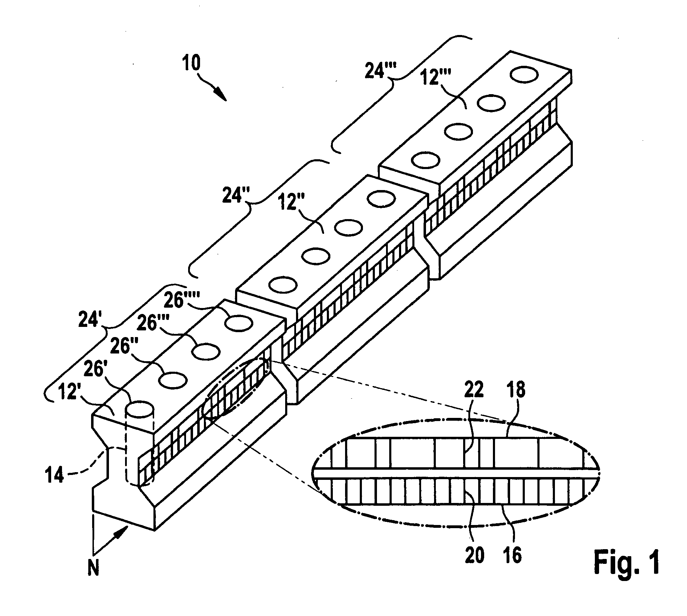

Figur 1 eine schematische Ansicht von einer Laufschiene.

Figur 1 zeigt eine schematische Ansicht von einer Laufschiene 10 eines linearen Wegmesssystems. Die Laufschiene 10 ist aus mehreren Einzelschienen 12', 12", 12"' zusammengesetzt, von denen in der Figur drei Schienen gezeigt sind.

Die Länge von Einzelschienen ist allgemein aus Fertigungsgründen begrenzt. Mit zunehmender Länge von einer Einzelschiene nehmen deren Herstellungskosten stark zu. Daher ist es üblich, dass eine Laufschiene aus mehreren Einzelschienen zusammengesetzt wird, welche linear zueinander ausgerichtet angeordnet werden.

Zur Befestigung ist jede Einzelschiene 12', 12", 12"' mit mehreren durchgehenden Bohrungen 14 versehen, durch welche Befestigungsschrauben (nicht gezeigt) steckbar sind, deren Gewinde beim Festschrauben in entsprechende Aufnahmegewinde einer unterhalb der Einzelschienen 12', 12", 12"' angeordneten Befestigungsplatte (nicht gezeigt) in Eingriff gelangen.

Die somit zusammengesetzte Laufschiene 10 dient zum Führen eines Laufschlittens (nicht gezeigt). Dieser Laufschlitten wird hierbei über zumindest ein Rollen- oder Kugellager an Oberflächenabschnitten der Einzelschienen 12', 12", 12"' geführt. Um die genaue Position dieses Laufschlittens in Relation zur gesamten Laufschiene 10 bestimmen zu können, sind an einer Seitenoberfläche von jeder Einzelschiene 12', 12", 12"' zwei Messskalen 16, 18 vorgesehen. Diese Messskalen 16, 18 enthalten eine inkrementale Skala 16 und eine absolute Skala 18. Die inkrementale Skala 16 enthält inkrementale Markierungen 20 und die absolute Skala 18 enthält absolute Markierungen 22.

Die inkrementalen Markierungen 20 sind als eine Folge von mehreren identischen Markierungen zusammengesetzt, welche in gleichen Abständen längs der inkrementalen Skala 16 angeordnet sind. Diese inkrementalen Markierungen 20 können durch einen Sensor der Abtastvorrichtung abgetastet werden, welcher entlang der inkrementalen Skala 16 geführt wird. Die Bewegung der Abtastvorrichtung resultiert dabei in einer periodischen Veränderung eines Signals, wobei diese Veränderung Aufschluss gibt über die Anzahl der inkrementalen Markierungen 20, über welche die Abtastvorrichtung innerhalb einer bestimmten Zeit vorbeibewegt worden ist.

Neben der Erfassung der relativen Bewegung zwischen Laufschiene 10 und Laufwagen bzw. Abtastvorrichtung wird eine absolute Position der Abtastvorrichtung in Relation zu einer jeden Einzelschiene 12', 12", 12"' mittels der absoluten Markierungen 22 auf der absoluten Skala 18 erfasst. Hierbei kann die jeweilige absolute Position der Abtastvorrichtung an einem beliebigen Ort entlang einer jeden Einzelschiene 12', 12", 12"' bestimmt werden, indem eine Änderung der relativen Position der Abtastvorrichtung bezüglich eines bestimmten Referenzpunktes gemessen wird. Die Abtastung der absoluten Markierungen 22 geschieht ebenfalls über einen Sensor der Abtastvorrichtung, welcher entlang der absoluten Skala 18 geführt wird. Diese Abtastung muss hierbei besonders zuverlässig erfolgen, da eine jegliche Fehlinterpretation zu einer falschen Aussage bezüglich der Position des Laufschlittens in Bezug auf eine jegliche Einzelschiene 12', 12", 12"' führen würde.

Die inkrementalen Markierungen 20 und/oder absoluten Markierungen 22 können jeweils als einzelne Permanentmagnete ausgebildet sein, deren magnetischer Feldstärkeverlauf durch die jeweiligen Sensoren der Abtastvorrichtung abtastbar ist. Alternativ können die inkrementalen Markierungen 20 und/oder absoluten Markierungen 22 jeweils als optische Markierungen ausgebildet sein, welche optisch durch die jeweiligen Sensoren der Abtastvorrichtung abtastbar sind.

Die Positionsmarkierungen, d.h. die inkrementalen Markierungen 20 und die absoluten Markierungen 22, von der inkrementalen Skala 16 und der absoluten Skala 18 sind von Einzelschiene zu Einzelschiene wiederholt identisch angeordnet. Mit anderen Worten, sind die Messkalen 16, 18 von jeder Einzelschiene 12', 12", 12"' in Bezug auf beispielsweise den Anfang von der Einzelschiene mit einer identischen Kodierung versehen. Dies hat den Vorteil, dass die Laufschiene 10 problemlos mit zumindest einer weiteren Einzelschiene erweitert werden kann. Ein weiterer Vorteil besteht darin, dass eine beliebige Einzelschiene problemlos durch eine neue Einzelschiene ersetzt werden kann, welche bereits mit den Messskalen 16, 18 versehen ist. Hierdurch werden die Logistik und Lagerhaltung vereinfacht, da entgegen dem Stand der Technik immer nur ein Typ von Einzelschiene vorgehalten werden muss. Insgesamt werden Zeit und Kosten eingespart.

Um dennoch weiterhin die Position des Laufschlittens entlang der gesamten Laufschiene 10 exakt bestimmen zu können, ist ferner an jeder Einzelschiene 12', 12", 12"' eine separate abtastbare Individualkodierung 24", 24", 24"' bereitgestellt, welche eine von Einzelschiene zu Einzelschiene individuelle Information trägt. Somit kann die jeweilige Einzelschiene bestimmt werden, auf welche der Laufschlitten aktuell geführt ist. In dem in der Figur gezeigten Beispiel ist die jeweilige Individualkodierung 24', 24", 24"' durch die Oberflächen von Verschlussstopfen 26', 26", 26"', 26"" implementier bzw. bereitgestellt, welche jeweils ein diskretes Symbol eines Kodewortes bilden. Diese Verschlussstopfen 26', 26", 26"', 26"" werden üblicherweise zum Verschliessen der zuvor genannten Bohrungen 14 verwendet. Hierbei schliessen die Oberflächen der Verschlussstopfen 26', 26", 26"', 26"" bündig mit der jeweiligen Oberfläche der Einzelschienen 12', 12", 12"' ab.

Die Oberfläche eines Verschlussstopfens oder der Verschlussstopfen selber gibt einen diskreten Zustand wieder. Beispielsweise kann ein diskreter Zustand durch eine (diskrete) Materialeingenschaft eines Materials von der Oberfläche eines Verschlussstopfens oder von dem Verschlussstopfen selber bestimmt werden, z.B. Stahl, Messing, Kunststoff, usw. Die somit jeweils gebildete Individualkodierung 24', 24", 24"' kann in diesem Beispiel durch einen induktiven Messsensor der Abtastvorrichtung abgetastet werden.

In einem weiteren Beispiel, wie in der Figur 1 gezeigt, wird die Individualkodierung 24', 24", 24"' durch binäre Zustände der Oberflächenfarbe (weiss/schwarz) der jeweiligen Verschlussstopfen 26', 26", 26"', 26"" gebildet. Unter der Annahme, dass der Farbe "Weiss" ein Binärwert "0" und der Farbe "Schwarz" ein Binärwert "1" zugewiesen werden, können hierbei die Einzelschienen 12', 12", 12"' durch die binären Kodierungen (Individualkodierungen) 0000, 0001, 0010, 0011, ... fortlaufend nummeriert werden. Anstelle der fortlaufenden Nummerierung können die Einzelschienen 12', 12", 12"' auch mit einer anderen oder zusätzlichen Information individuell und eindeutig kodiert werden, solange diese Information Rückschluss über die jeweilige Einzelschiene zulässt.

Wenn nunmehr die Abtastvorrichtung beispielsweise die Individualkodierung 24"' mit dem binären Kodewort "0010" abtastet, ist hieraus für das lineare Wegmesssystem die Information herleitbar, dass der Laufschlitten auf der dritten Einzelschiene 12"' bewegt wird. Anhand der Information aus der weiteren Abtastung der inkrementalen Skala 16 und zusätzlich der absoluten Skala 18 auf dieser dritten Einzelschiene 12"' ist die Abtastvorrichtung ferner dazu in der Lage, die Position des Laufschlittens in Relation zu einem Anfangspunkt dieser dritten Einzelschiene 12"' zu bestimmen (z.B. eine Distanz von 1,5m zum Anfangspunkt), bzw. die Information hierzu an das lineare Wegmesssystem zu übermitteln. In Kenntnis der Länge von den jeweiligen Einzelschienen 12' und 12" (z.B. jeweils 3m) kann somit die Position des Laufschlittens in Relation zur gesamten Laufschiene 10 bestimmt werden, indem die Distanz zwischen einem Anfangspunkt (Nullpunkt N) der Laufschiene 10 und dem Laufschlitten berechnet wird. In diesem Beispiel beträgt die Distanz D = 2 * 3m + 1,5m = 7,5m.

In dem in der Figur gezeigten Beispiel sind die Individualkodierungen 24', 24", 24"' durch vier Verschlussstopfen 26', 26", 26"', 26"" (vier Symbole) bzw. deren Oberfläche gebildet. Bei einer binären Kodierung mit beispielsweise der fortlaufenden Nummerierung können somit 16 Einzelschienen eindeutig zugeordnet werden. Dem obigen Beispiel folgend, kann somit eine bis zu 16 * 3m = 48m lange Laufschiene 10 realisiert werden.

## Patentansprüche

1. Lineares Wegmesssystem zum Bestimmen von einer Position eines Laufschlittens in Relation zu einer aus einer Mehrzahl von Einzelschienen (12', 12", 12"') linear zusammengesetzten Laufschiene (10), entlang welcher der Laufschlitten führbar ist, mit einer Mehrzahl von jeweils entlang von den Einzelschienen (12', 12", 12"') aufgetragenen Messskalen (16, 18), auf welchen jeweils Positionsmarkierungen (20, 22) angeordnet sind, und zumindest einer am Laufschlitten angebrachten Abtastvorrichtung, welche dazu ausgelegt ist, die Positionsmarkierungen (20, 22) abzutasten, wodurch die jeweilige Position des Laufschlittens in Relation zu einer jeweiligen Einzelschiene, auf welche der Laufschlitten geführt ist, bestimmbar ist, wobei
bei allen Einzelschienen (12', 12", 12"') die Positionsmarkierungen (20, 22) identisch auf der jeweiligen Mehrzahl von Messskalen (16, 18) angeordnet sind, und
an den Einzelschienen (12', 12", 12"') jeweils eine separate Individualkodierung (24', 24", 24"') bereitgestellt ist, welche durch die Abtastvorrichtung abtastbar ist, wodurch eine individuelle Information über eine jeweilige Einzelschiene, auf welche der Laufschlitten geführt ist, bestimmbar ist.

2. Lineares Wegmesssystem nach Anspruch 1, bei welchem die Individualkodierung (24', 24", 24"') von Einzelschiene zu Einzelschiene die Information einer fortlaufenden Nummerierung trägt.

3. Lineares Wegmesssystem nach Anspruch 2, bei welchem die fortlaufende Nummerierung durch einen Gray-Kode kodiert ist.

4. Lineares Wegmesssystem nach einem der vorhergehenden Ansprüche, bei welchem die Individualkodierung einer jeweiligen Einzelschiene (12', 12", 12"') durch eine Mehrzahl von Verschlussstopfen (26', 26", 26"', 26"') implementiert ist, welche in jeweilige Bohrungen (14) der Einzelschienen (12', 12", 12"') eingebracht sind und diese verschliessen.

5. Lineares Wegmesssystem nach Anspruch 4, bei welchem jeder der Verschlussstopfen (26', 26", 26"', 26"") eine diskrete Information trägt.

6. Lineares Wegmesssystem nach Anspruch 5, bei welchem die diskrete Information durch eine jeweilige Materialeigenschaft eines Werkstoffes herleitbar ist, welcher in dem Verschlussstopfen (26', 26", 26"', 26"") enthalten ist.

7. Lineares Wegmesssystem nach Anspruch 5, bei welchem die diskrete Information durch eine jeweilige Geometrie der Oberfläche des Verschlussstopfens (26', 26", 26"', 26"") herleitbar ist.

8. Lineares Wegmesssystem nach Anspruch 5, bei welchem die diskrete Information durch ein Schaltelement herleitbar ist, welches im Verschlussstopfen (26' , 26", 26"', 26"") integriert ist oder an der Oberfläche des Verschlussstopfens (26', 26", 26"', 26"") angebracht ist.

9. Lineares Wegmesssystem nach Anspruch 8, bei welchem das Schaltelement ein RFID-Datenträger ist.

10. Lineares Wegmesssystem nach einem der vorhergehenden Ansprüche, bei welchem die Positionsmarkierungen eine inkrementale Markierung (20) und/oder eine absolute Markierung (22) enthalten.

11. Lineares Wegmesssystem nach einem der vorhergehenden Ansprüche, bei welchem die inkrementale Markierung (20) und/oder absolute Markierung (22) jeweils als einzelne Permanentmagnete ausgebildet sind, deren magnetischer Feldstärkeverlauf durch die zumindest eine Abtastvorrichtung abtastbar ist.

12. Lineares Wegmesssystem nach einem der Ansprüche 1 bis 10, bei welchem die inkrementale Markierung (20) und/oder absolute Markierung (22) jeweils als optische Markierungen ausgebildet sind, welche durch die zumindest eine Abtastvorrichtung optisch abtastbar sind.

## Claims

1. A linear position measuring system for determining a position of a carriage in relation to a slide rail (10) linearly comprised of a plurality of individual rails (12', 12", 12"'), along which the carriage can be guided, with a plurality of measuring scales (16, 18) respectively placed along the individual rails (12', 12", 12"') and bearing respective position markings (20, 22), and at least one scanner secured to the carriage and designed to scan the position markings (20, 22), making it possible to determine the respective position of the carriage in relation to a respective individual rail on which the carriage is guided, wherein
the position markings (20, 22) in all individual rails (12', 12" , 12"') are identically arranged on the respective plurality of measuring scales (16, 18), and
a separate individual coding (24', 24", 24"') is provided on the individual rails (12', 12", 12"'), and can be scanned by the scanner, so that an individual piece of information can be gleaned about a respective individual rail on which the carriage is guided.

2. The linear position measuring system according to claim 1, in which the individual coding (24', 24", 24"') carries the information of a consecutive numeration from one individual rail to another.

3. The linear position measuring system according to claim 2, in which the consecutive numeration is encoded with a Gray code.

4. The linear position measuring system according to one of the preceding claims, in which the individual coding of a respective individual rail (12', 12", 12"') is implemented by a plurality of sealing plugs (26', 26", 26"', 26""), which are introduced into respective boreholes (14) in the individual rails (12', 12", 12"'), sealing the latter.

5. The linear position measuring system according to claim 4, in which each of the sealing plugs (26', 26", 26"', 26"") carries a discrete piece of information.

6. The linear position measuring system according to claim 5, in which the discrete information can be derived via a respective material property of a material contained in the sealing plug (26', 26", 26"', 26"").

7. The linear position measuring system according to claim 5, in which the discrete information can be derived via a respective geometry for the surface of the sealing plug (26', 26", 26"', 26"").

8. The linear position measuring system according to claim 5, in which the discrete information can be derived via a switching element integrated into the sealing plug (26', 26", 26"', 26"") or secured to the surface of the sealing plug (26', 26", 26", 26"") .

9. The linear position measuring system according to claim 8, in which the switching element is an RFID data carrier.

10. The linear position measuring system according to one of the preceding claims, in which the position markings contain an incremental marking (20) and/or an absolute marking (22).

11. The linear position measuring system according to one of the preceding claims, in which the incremental marking (20) and/or absolute marking (22) are each designed as individual permanent magnets, whose magnetic field strength progression can be scanned by the at least one scanner.

12. The linear position measuring system according to one of claims 1 to 10, in which the incremental marking (20) and/or absolute marking (22) are each designed as optical markings, which can be optically scanned by the at least one scanner.

## Revendications

1. Système de mesure de course linéaire pour la détermination d'une position d'un chariot de roulement en relation avec une glissière (10) assemblée linéairement à partir d'une pluralité de barres individuelles (12', 12", 12"') le long de laquelle le chariot de roulement peut être guidé, avec une pluralité d'échelles de mesure (16, 18) respectivement apposées le long des barres individuelles (12', 12", 12"'), sur lesquelles sont respectivement disposés des marquages de position (20, 22), et au moins un dispositif de balayage aménagé sur le chariot de roulement, lequel est étudié pour balayer les marquages de position (20, 22), moyennant quoi il est possible de déterminer la position respective du chariot de roulement en relation avec une barre individuelle respective, sur laquelle le chariot de roulement est guidé, moyennant quoi
pour toutes les barres individuelles (12', 12", 12"'), les marquages de position (20, 22) sont disposés de manière identique sur la pluralité des échelles de mesure (16, 18) respectives, et
un codage individuel distinct (24', 24", 24"') étant respectivement mis à disposition au niveau des barres individuelles (12', 12", 12"'), lequel peut être balayé par le dispositif de balayage, moyennant quoi il est possible de déterminer, grâce à une information individuelle, une barre de guidage individuelle respective sur laquelle le chariot de guidage est guidé.

2. Système de mesure de course linéaire selon la revendication 1, dans lequel le codage individuel (24', 24", 24"') comporte, de barre individuelle à barre individuelle, l'information d'une numérotation en continu.

3. Système de mesure de course linéaire selon la revendication 2, dans lequel la numérotation en continu est codée grâce à un codage Gray.

4. Système de mesure de course linéaire selon l'une des revendications précédentes, dans lequel le codage individuel d'une barre individuelle respective (12', 12", 12"') est implémenté grâce à une pluralité de bouchons de fermeture (26', 26", 26" , 26""), lesquels sont mis en place dans des perçages (14) respectifs des barres individuelles (12', 12", 12"') et ferment ceux-ci.

5. Système de mesure de course linéaire selon la revendication 4, dans lequel chacun des bouchons de fermeture (26', 26", 26" , 26"") comporte une information discrète.

6. Système de mesure de course linéaire selon la revendication 5, dans lequel l'information discrète peut être déduite grâce à une propriété respective d'un matériau, lequel est contenu dans le bouchon de fermeture (26', 26", 26"', 26"").

7. Système de mesure de course linéaire selon la revendication 5, dans lequel l'information discrète peut être déduite grâce à une géométrie respective de la surface du bouchon de fermeture (26', 26", 26"', 26"").

8. Système de mesure de course linéaire selon la revendication 5, dans lequel l'information discrète peut être dérivée grâce à un élément de commutation, lequel est intégré dans le bouchon de fermeture (26', 26", 26"', 26"") ou bien est aménagé sur la surface du bouchon de fermeture (26', 26", 26"', 26"").

9. Système de mesure de course linéaire selon la revendication 8, dans lequel l'élément de commutation est un support de données RFID.

10. Système de mesure de course linéaire selon l'une des revendications précédentes, dans lequel les marquages de position contiennent un marquage incrémentiel (20) et/ou un marquage absolu (22).

11. Système de mesure de course linéaire selon l'une des revendications précédentes, dans lequel le marquage incrémentiel (20) et/ou le marquage absolu (22) sont respectivement réalisés en tant qu'aimants permanents individuels dont la variation de puissance du champ magnétique peut être balayée grâce à l'au moins un dispositif de balayage.

12. Système de mesure de course linéaire selon l'une des revendications 1 à 10, dans lequel le marquage incrémentiel (20) et/ou le marquage absolu (22) sont respectivement réalisés en tant que marquages optiques, lesquels peuvent être balayés optiquement par l'au moins un dispositif de balayage.
